# EUROPEAN PATENT APPLICATION

(11) **EP 3 138 398 A1**
(43) Date of publication of application: **08.03.2017**
(21) Application number: 16275128.3
(22) Date of filing: 02.09.2016
(51) Int. Cl.: A01M 29/32

(54) **BIRD DETERRENT**

(30) Priority: 02.09.2015 GB 201515565
(71) Applicant: Rentokil Initial 1927 PLC, Camberley, Surrey GU17 9AB (GB)
(72) Inventor: Rühman, Florian, 76549 Hügelsheim (DE)
(74) Representative: Burt, Matthew Thomas

(57) **Abstract**

A bird deterrent (100) for discouraging birds from roosting. The bird deterrent has a first surface for mounting on a structure, and a second surface opposite the first surface comprising a plurality of protrusions (104). The protrusions (104) are formed from resilient solid foam.

## Description

### Field of the Invention

The present invention concerns bird deterrents for discouraging birds from roosting on structures.

### Background of the Invention

Birds are known to perch in places on and around rooftops, ledges, handrails, borders, rounded borders and other such areas. This can be undesirable, as the birds can cause unwanted noise and can be unhygienic.

It is known to use bird deterrents to discourage the roosting of birds in such areas. Such bird deterrents typically comprise a set of rigid spikes made from metal or plastic. A known bird deterrent is disclosed in US 2015150238 A1 published 4 June 2015.

In commercial sites such as farms and factories, and in other areas not accessed by the public such as the rooftops of flats and commercial buildings, it may be desirable to discourage the roosting of birds on structures that are intended to be used by people in the area, such as handrails and the like. However, known bird deterrents cannot be used on such structures, due to the risk they present of causing injury to people. For example, a bird deterrent mounted on a handrail will present a clear risk of a person being injured by having a spike stick into their hand.

Known bird deterrents can also cause harm to birds that attempt to roost, despite the bird deterrent being present.

The present invention seeks to mitigate the above-mentioned problems. Alternatively or additionally, the present invention seeks to provide improved bird deterrents.

### Summary of the Invention

In accordance with a first aspect of the invention, there is provided a bird deterrent for discouraging birds from roosting, the bird deterrent having a first surface for mounting on a structure and a second surface opposite the first surface comprising a plurality of protrusions, wherein the protrusions are formed from resilient solid foam.

In this way, birds are discouraged from roosting on structures on which the bird deterrent is mounted, as the protrusions present an uneven surface to the birds which they are naturally averse to roosting upon. However, as the protrusions are formed from resilient solid foam, if gripped by a person they will not injure them, and will compress so that if the structure is a handrail, for example, the person's use of the handrail is not hampered. Once the protrusion is no longer gripped, the protrusions will return to their original shape, so again providing a deterrent to any birds.

The resilient solid foam may be polyurethane foam. Alternatively, other suitable foams may be used.

Preferably, following compression the protrusions return to their original shape in 3 seconds or less.

Advantageously, the resilient solid foam is waterproof. The resilient solid foam may be impregnated with a water-repellent substance. Alternatively, the resilient solid foam may have a water-repellent coating. The resilient solid foam may be structured to minimise the amount of water it absorbs.

The bird deterrent may comprise a base formed of the resilient material having the first surface. This allows the bird deterrent to be formed as a single piece of resilient solid foam. Alternatively, the protrusions may be mounted on a strip of plastics material or the like, for example.

The bird deterrent may comprise an adhesive layer for fixing the bird deterrent to the structure.

The protrusions may be arranged collinearly. Alternatively, the protrusions may be arranged in other ways.

Preferably, the protrusions are pointed. In this case, the protrusions may be pyramidal.

The bird deterrent may be other appropriate shapes, such as rippled, asymmetrical and/or wave-shaped.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a bird deterrent device according to a first embodiment of the invention;
Figure 2 shows a bird deterrent device according to a second embodiment of the invention;
Figure 3 shows a bird deterrent device according to a third embodiment of the invention;
Figure 4 shows a bird deterrent device according to a fourth embodiment of the invention; and
Figure 5 shows a bird deterrent device according to a fifth embodiment of the invention.

### Detailed Description

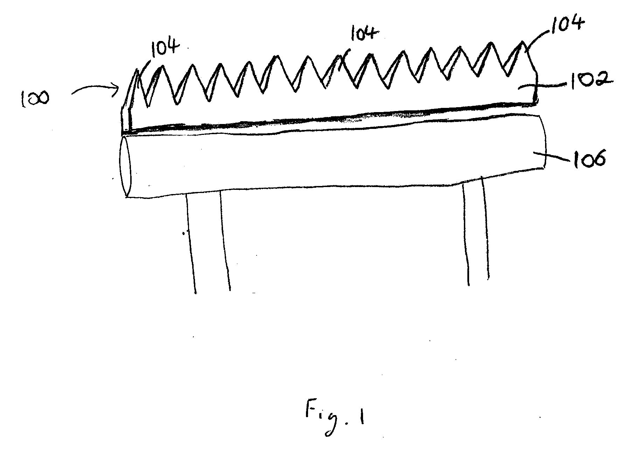

A bird deterrent in accordance with a first embodiment of the invention is shown in Figure 1. The bird deterrent 100 comprises a base 102, and a set of protrusions 104 arranged collinearly upon the base. The protrusions 104 are in the shape of square-pyramidal spikes. In alternative embodiments, the protrusions 104 are other suitable shapes.

The bird deterrent 100 is formed of solid polyurethane foam, which is compressible and resilient (i.e. "springs back" after it is compressed). The polyurethane foam is waterproof. In other embodiments, the foam is impregnated with a water-repellent substance, has a water-repellent coating, or may be structured to minimise the amount of water it absorbs. In another embodiment, the foam is water-permeable.

In the present embodiment, the foam is produced using a polyaddition reaction of polyols with polyisocyanates to create slabs of foam, which are then cur to the required shape after the reaction has finished.

The bird deterrent 100 is grey in colour, due to grey pigment present in the polyurethane foam. In other embodiments other colours are used, for example so that the colour of bird deterrent can be selected to blend into its surroundings. The bird deterrent may be painted rather than pigmented.

The base 102 of the bird deterrent 100 is mounted upon a handrail 106, by adhesive applied between the top of the handrail 106 and the bottom of the base 102. In other embodiments, a layer of adhesive or magnetic strip is provided on the bottom of the base 102 during manufacture, to allow it to be fixed in position without additional adhesive being required. In still further embodiments, the bird deterrent 100 is tied to the handrail 106.

The height of the protrusions 104 is preferably sufficient to provide an unstable surface for deterring bird roosting, and the protrusions 104 preferably have a height of at least 70mm. The height of the base 102 in the present embodiment is 20mm, while in other embodiments the height of the base 102 may be larger or smaller. The width of the bird deterrent is 20mm, but in other embodiments larger or smaller widths may be used, for example to match the width of the structure 106 the bird deterrent is intended to be attached to. The bird deterrent 100 may have any length and is preferably made to match the length of the structure 106.

In use, the bird deterrent 100 discourages the roosting of birds, as the protrusions 104 provide an uneven surface which birds are naturally averse to roosting upon, as the shape of the bird deterrent 100 suggests to them that there is no "seat" for them to rest upon. Further, use of foam makes the bird deterrent 100 "spongy", which again birds are naturally averse to roosting upon.

However, the use of foam means that the bird deterrent 100 present no risk of injury to a person using the handrail 106. In addition to it not being possible for a person to injure themselves upon the bird deterrent 100, the compressive nature of the foam means that the handrail 106 can still be securely gripped, as the bird deterrent 100 deforms when pushed by the person so that it does not present an obstruction between the handrail 106 and the hand of the person. This is particularly the case due to the pyramidal shape of the protrusions 104, which means that they are highly flexible and can be deformed easily. Further, the surface of the foam provides a level of friction helping ensure a secure grip.

Once the bird deterrent 100 is no longer being gripped by a person, the base 102 and protrusions 104 are free to return to their original shape. Ideally, the bird deterrent 100 returns to its original shape within 3 seconds. A time of less than 3 seconds may be preferable. The bird deterrent 100 can return to its original shape after deformation many times, preferably many hundreds of times. However, if the bird deterrent 100 becomes damaged and/or worn out and/or no longer returns to its original shape, it can easily be removed and replaced.

It will be understood that while in the present embodiment the structure to be protected is a handrail 106, other structures to protect may be ledges, borders, rounded borders, rooftops, top surfaces of buildings or objects, or any other suitable structures.

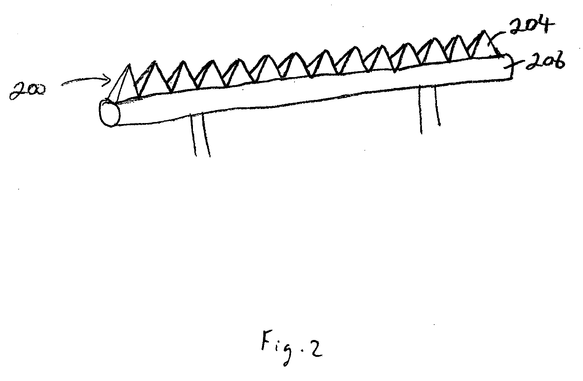

A bird deterrent in accordance with a second embodiment of the invention is shown in Figure 2. The bird deterrent 200 is the same as that shown in Figure 1, except that the bird deterrent 200 does not comprise a foam base. Instead, the protrusions 204 are directly attached to a structure 206. The bird deterrent 200 may comprise a flexible strip of plastics material or the like of negligible thickness (not shown in Figure 2) upon which the protrusions 204 are fixed, to facilitate its installation (e.g. so that the strip can be fixed to the structure 206 using adhesive rather than each protrusion 204 needing to be fixed individually). The strip may comprise a layer of adhesive that is provided during manufacture of the bird deterrent 200.

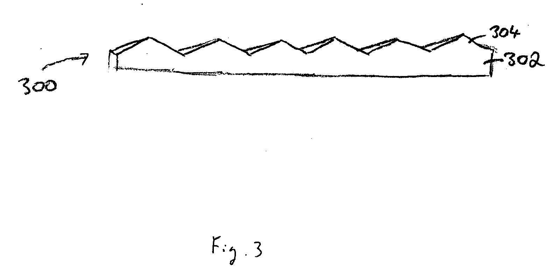

A bird deterrent in accordance with a third embodiment of the invention is shown in Figure 3. The bird deterrent 300 is the same as that shown in Figure 1, except that the protrusions 304 are wider and flatter, so that they have a smaller height above the base 302. The protrusions 304 still act to discourage birds from roosting, but have a less "spiky" appearance and so may be less likely to discourage a person from gripping a structure on which the bird deterrent 300 is mounted.

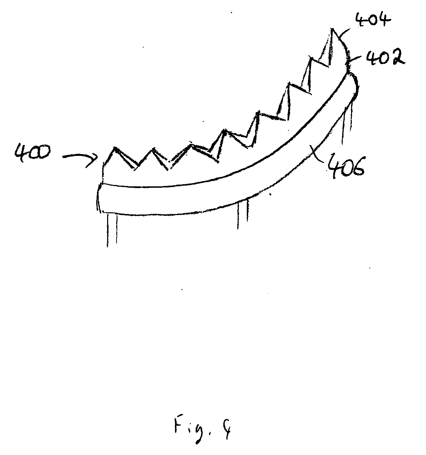

A bird deterrent in accordance with a fourth embodiment of the invention is shown in Figure 4. In this embodiment, the structure 406 to protect from bird roosting does not have a linear shape. The bird deterrent 400 is flexible and so may be attached to the structure such that the base 402 and protrusions 404 follow the shape of the structure 406. The bird deterrents as described according to any Figures 1, 2, 3 or 5 may be employed in a similar manner.

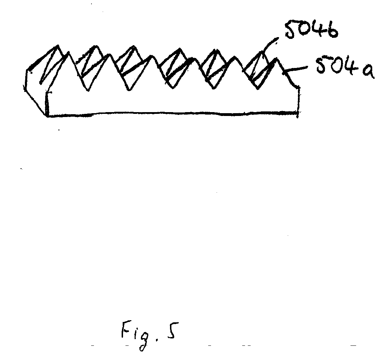

A bird deterrent in accordance with a fifth embodiment of the invention is shown in Figure 5. The bird deterrent 500 is the same as that shown in Figure 1, except there is provided two rows of protrusions 504a and 504b. In other embodiments a higher number of rows of protrusions may be used. The protrusions 504b are provided in line with the protrusions 504a, while in other embodiments the protrusions 504b are displaced with respect to the protrusions 504a.

Whilst the present invention has been described and illustrated with reference to particular embodiments, it will be appreciated by those of ordinary skill in the art that the invention lends itself to many different variations not specifically illustrated herein. In particular, it will be appreciated that bird deterrents comprising various different configurations of spikes or other shapes, angled or vertical, and/or combinations thereof, could be provided in accordance with the invention. A bird deterrent in accordance with the invention might comprise a strip of plastics material upon which are mounted a plurality of protrusions, in which the protrusions do not touch (i.e. there are gaps between the protrusions).

## Claims

1. A bird deterrent for discouraging birds from roosting, the bird deterrent having a first surface for mounting on a structure and a second surface opposite the first surface comprising a plurality of protrusions, wherein the protrusions are formed from resilient solid foam.

2. A bird deterrent as claimed in claim 1, wherein the resilient solid foam is polyurethane foam.

3. A bird deterrent as claimed in claim 1 or 2, wherein following compression the protrusions return to their original shape in 3 seconds or less.

4. A bird deterrent as claimed in any preceding claim, wherein the resilient solid foam is waterproof.

5. A bird deterrent as claimed in any preceding claim, comprising a base formed of the resilient material having the first surface.

6. A bird deterrent as claimed in any preceding claim, further comprising an adhesive layer for fixing the bird deterrent to the structure.

7. A bird deterrent as claimed in any preceding claim, wherein the protrusions are arranged collinearly.

8. A bird deterrent as claimed in any preceding claim, wherein the protrusions are pointed.

9. A bird deterrent as claimed in claim 8, wherein the protrusions are pyramidal.

10. A bird deterrent substantially as described herein, with reference to any of Figures 1 to 5 of the accompanying drawings.
